# EUROPEAN PATENT APPLICATION

(11) **EP 4 670 875 A1**
(43) Date of publication of application: **31.12.2025**
(21) Application number: 24185197.1
(22) Date of filing: 28.06.2024
(51) Int. Cl.: B23B 27/04, B23B 27/14

(54) **A CUTTING INSERT FOR TURNING AND A TURNING TOOL**

(71) Applicant: AB Sandvik Coromant, 811 81 Sandviken (SE)
(72) Inventor: Wikblad, Krister, Sandviken (SE); Löf, Ronnie, Sandviken (SE); Wickström, David, Sandviken (SE)
(74) Representative: Sandvik

(57) **Abstract**

The invention relates to a cutting insert (1, 10) for a turning tool. The cutting insert comprises a top surface (2), a bottom surface (3), a front surface (6), a rear surface (7) and first and second side surfaces (4, 5). A longitudinal axis (A1) intersects the front and rear surfaces (6, 7) and extends mid-way between the first and second side surfaces (4, 5). A cutting edge (8) is formed at an intersection between the top surface (2) and the front surface (6), wherein the cutting edge (8) comprises a surface generating cutting edge (9), a first major cutting edge portion (17) and a first corner cutting edge (15). The first major cutting edge portion (17) extends rearward from the surface generating cutting edge (9), and the first corner cutting edge (15) extends rearward from the first major cutting edge portion (17). In a plan view of the top surface, the first corner cutting edge (15) is convexly curved and has a first length of extension (L1) and the surface generating cutting edge (9) is convexly curved and has a second length of extension (L2), wherein the first length of extension (L1) is greater than the second length of extension (L2).

## Description

### TECHNICAL FIELD

The invention relates to metal cutting, and in particular to turning operations wherein a turning tool is used for machining a rotating workpiece.

### BACKGROUND ART

Within the field of metal cutting, a turning tool may be used for machining the surface of a rotating workpiece.

A cutting insert, for example made of cemented carbide or some other wear resistant material, is commonly arranged at the front of a turning tool. Cutting inserts often include multiple cutting edges, such that the cutting insert is indexable, i.e., such that different cutting edges can be positioned in active or inactive positions depending on how the cutting insert is mounted in the insert seat.

Some cutting inserts include holes extending centrally through the insert for facilitating mounting of the cutting insert in an insert seat of a turning tool, for example by using a screw. Other cutting inserts, such as cutting inserts used for grooving or parting, and the corresponding tools arranged to hold such cutting inserts, are oblong and thin and do not have the thickness required for such through-hole and such cutting inserts must therefore be fixed in the insert seat by other means.

EP3417964 discloses such a cutting insert that is fixed in a tool blade by clamping means. The cutting insert has a CBN cutting edge and is adapted for longitudinal turning in any of two opposite feed directions and therefore has major cutting edge portions extending on either side of a surface generating cutting edge that is nearly flat or has a very large radius of curvature, and corner cutting edges with small radii of curvature. The corner cutting edges are not active in a longitudinal turning operation but may be designed such as to allow for radial grooving. Even though a cutting insert geometry according to EP3417964 may be suitable for certain machining operations and provides the possibility for longitudinal turning in opposite directions, the geometry is otherwise not very versatile. For example, the cutting insert is not particularly suitable for machining within narrow pockets of a workpiece.

Accordingly, there is a need for improved small sized cutting inserts for turning that are versatile and strong.

### SUMMARY

It is an object of the present invention to mitigate the shortcomings of the prior art and to provide a small sized cutting insert suitable for turning that is both strong and versatile. Another object is to provide a cutting insert that can be used without being damaged also in operations where the cutting depth may vary during the cut. Another object is to provide a turning tool that is versatile with respect to different kinds of machining operations and/or feed directions. Another object is to provide a cutting insert that is suitable for machining within narrow grooves or pockets in a workpiece.

Thus, according to a first aspect, the invention relates to a cutting insert for a turning tool, the cutting insert comprising:
- a top surface and a bottom surface, wherein the top and bottom surfaces are arranged opposite each other and facing opposite directions;
- a peripheral surface connecting the top surface and the bottom surface, wherein the peripheral surface includes a first side surface, a second side surface, a front surface, and a rear surface, wherein the first and second side surfaces are arranged opposite each other and facing opposite directions, and the front and rear surfaces are arranged opposite each other and facing opposite directions;
- a longitudinal axis intersecting the front and rear surfaces, wherein the longitudinal axis extends mid-way between the first and second side surfaces; and
- a cutting edge being at least partly formed at an intersection between the top surface and the front surface, wherein the cutting edge comprises a surface generating cutting edge, a first major cutting edge portion, and a first corner cutting edge.

The surface generating cutting edge includes a frontward point, wherein a tangent line of the surface generating cutting edge at the frontward point extends, in a plan view of the top surface, perpendicular to the longitudinal axis. The first major cutting edge portion extends from the surface generating cutting edge from a first axially forward point to a first axially rearward point, wherein a distance from the first axially forward point to the longitudinal axis is shorter than a distance from the first axially rearward point to the longitudinal axis. The first corner cutting edge is located rearward of the first major cutting edge portion, extending from the first axially rearward point, and wherein, in a plan view of the top surface, the first corner cutting edge is convexly curved and has a first length of extension and the surface generating cutting edge is convexly curved and has a second length of extension, wherein the first length of extension is greater than the second length of extension. The cutting edge may comprise a second corner cutting edge, wherein the first and second corner cutting edges are located on opposite sides of the longitudinal axis when seen in a plan view of the top surface. According to some embodiments, the cutting edge comprises not only a second corner cutting edge but also a second major cutting edge portion, and wherein the first and second major cutting edge portions are located on opposite sides of the surface generating cutting edge. The first and second major cutting edge portions may be located on opposite sides of the longitudinal axis when seen in a plan view of the top surface. The longitudinal axis may intersect the frontward point in a plan view of the top surface. The second major cutting edge portion may have a similar configuration as the first major cutting edge portion, i.e., the second major cutting edge portion may extend from the surface generating cutting edge from a second axially forward point to a second axially rearward point, wherein a distance from the second axially forward point to the longitudinal axis is shorter than a distance from the second axially rearward point to the longitudinal axis, and wherein the second corner cutting edge is located rearward of the second major cutting edge portion, extending from the second axially rearward point, and wherein, in a plan view of the top surface, the second corner cutting edge is convexly curved and has the first length of extension, i.e., the same length of extension as the first corner cutting edge.

Since the length of extension of each corner cutting edge is greater than the length of extension of the surface generating cutting edge, the corner cutting edges will be less sharp than the surface generating cutting edge. Thereby, due to the non-sharp profile of the corner cutting edges, the cutting insert will be very robust and insensitive to sudden changes of the cutting depth in a longitudinal turning operation.

Accordingly, it would be possible to maintain the feed also when approaching a shoulder since the corner cutting edge - if running into excessive workpiece material - is less likely to be damaged. This is partly because a non-sharp corner is stronger than a sharp corner, but also since such smooth corner will result in a thinner chip being cut, and the chip thickness will vary smoothly along the corner edge. Thereby, the generated forces and temperature increase will be less concentrated.

In general, the cutting insert is particularly well suited for operations where varying cutting depths can be expected.

In view of embodiments including two major cutting edge portions extending on opposite sides of a centrally arranged surface generating cutting edge, the cutting insert may be used for longitudinal turning, i.e., turning in a direction parallel to the rotation axis of the work piece, in any of two opposite feed directions, using the surface generating cutting edge as main cutting edge. The cutting insert may also be used for a facing operation, i.e., wherein the feed direction is perpendicular to the rotation axis of the workpiece being machined, using any of the corner cutting edges as main cutting edge. Hence, the insert may be used for longitudinal turning in two opposite feed directions and also for facing, wherein facing is possible using the corner cutting edge on either side of the surface generating cutting edge, for example in order to machine in a pocket or on two opposite faces of a machined component.

Hence, the cutting insert as disclosed herein is very versatile and robust and insensitive to varying cutting depths during machining. The cutting insert can also be made very small and is therefore suitable for use in tight pockets and other parts of a machined component that is difficult to reach.

As used herein, and if not mentioned otherwise, any references to the characteristics and extension of the cutting edge and parts thereof are made with respect to a plan view of the top surface of the cutting insert (sometimes simply referred to as a "top view"), i.e., as seen from a direction towards, and perpendicular to, the top surface.

The cutting insert may include a head portion that comprises the cutting edge, and wherein the head portion is connected to a stem portion. A greatest width of the head portion may be greater than a greatest width of the stem portion, where said widths are measured perpendicular to the longitudinal axis from the first side surface to the second side surface. The head portion may be permanently connected to the stem portion. The greatest width of the head portion may for example be 2 - 12 mm, such as 2.5 - 8 mm. The width of the stem portion may be constant or substantially constant. Hence, the width of the stem portion, or the distance from the first side surface to the second side surface, may be constant along the stem portion. Such width of the stem portion may be constant from the top surface to the bottom surface. In contrast, according to some embodiments, the width of the head portion may be increasing from the bottom surface towards the top surface.

The length of the stem portion, as measured along or parallel to the longitudinal axis, may be greater than the length of the head portion. The head portion comprises the front surface. The stem portion may comprise the rear surface. Alternatively, if the cutting insert comprises a second opposite head portion on the other side of the stem portion, said second head portion would comprise the rear surface and the stem portion would be located between the head portions. In other words, according to some embodiments, the cutting insert includes two head portions, one on each side of the stem portion along the longitudinal axis, wherein each head portion includes a cutting edge. With such design, the cutting insert would be arrangeable in two different positions in an insert seat of a turning tool and would thus be indexable.

The top surface of the cutting insert comprises a rake face and preferably one or more seating surfaces. The bottom surface may comprise one or more seating surfaces. One of the first side surface and the second side surface of the cutting insert may face a longitudinal feed direction during use, and the front surface of the cutting insert may face the work piece during use. According to some embodiments, the rear surface of the cutting insert comprises a seating surface or a contact surface, i.e., a surface which is in contact with an insert seat of the tool body in which the cutting insert is mountable.

The longitudinal axis intersects the front and rear surfaces, extending mid-way between the first and second side surfaces. During cutting, the longitudinal axis may be perpendicular to the rotational axis of the workpiece being machined. According to some embodiments, and in particular embodiments wherein the cutting edge includes two major cutting edge portions and a centrally arranged surface generating cutting edge, the longitudinal axis may correspond to an axis of symmetry.

According to some embodiments, the cutting insert may be a positive insert, wherein at least parts of the peripheral surface, and in particular the front surface, forms an angle to the top surface less than 90°, i.e., the front surface slopes away from the top surface towards the bottom surface to provide additional clearance when cutting.

The cutting insert may be made from a wear resistant material, such as cemented carbide. The cutting insert may be non-coated or coated with thin layer of a different material.

The cutting insert may be detachably mountable in an insert seat of a tool body. Said tool body may be made from a less wear resistant material than the cutting insert, such as steel.

The cutting edge is at least partly formed at, or at least partly extend along, an intersection or border line between the top surface and the front surface. The cutting edge may also extend along parts of intersections between the top surface and the first and second side surfaces. The cutting edge may be continuous or uninterrupted. The cutting edge may be smooth in a top view, i.e., without sharp corners or sharp transitions. The cutting edge may be in a singular plane. Alternatively, the cutting edge may have a height, seen in a side view or in a front view, which varies.

The cutting edge comprises a frontward point. No point of the cutting insert is more distant or spaced apart from the rear surface, in a top view, than the frontward point.

A tangent line of the cutting edge, in a top view, at the frontward point extends in a top view perpendicular to the longitudinal axis.

According to some embodiments, and in particular embodiments wherein the cutting edge includes two major cutting edge portions and a centrally arranged surface generating cutting edge, the cutting insert is symmetrical or substantially symmetrical in a top view in relation to the longitudinal axis. In other words, the cutting insert may be symmetric about a vertical plane which intersects the front and rear surfaces, and which plane comprises the longitudinal axis.

The length of extension of each corner cutting edge is greater than the length of extension of the surface generating cutting edge. For embodiments comprising two corner cutting edges and/or two major cutting edge portions, both corner cutting edges may have mutually corresponding lengths of extension, and both major cutting edge portions may have mutually corresponding lengths of extension.

Each of the corner cutting edges and the surface generating cutting edge may be formed by one or more curvilinear segments. For example, each such cutting edge may be formed by one or more circular segments having certain radii of curvature. One or more of the curvilinear segments may also be differently curved, for example corresponding to an elliptical segment. Such cutting edge may be formed by a single circular segment having a constant radius of curvature, or by a single elliptical segment. Alternatively, such cutting edge may be formed by multiple such segments having different curvatures, but the cutting edges are not wave-shaped or have an otherwise periodically changing configuration. In other words, each of the corner cutting edges and the surface generating cutting edge may be strictly convex in a plan view of the top surface.

The surface generating cutting edge is the portion of the cutting edge which generates the machined surface and/or wipes the machined surface in a longitudinal turning operation. By having a surface generating cutting edge that is non-linear, the machined surface finish is improved even in case of angular displacement of the cutting insert, i.e., in case that the longitudinal axis of the cutting insert is not exactly perpendicular to the rotational axis of the work piece.

The major cutting edge portions may be straight, i.e., rectilinear, or substantially rectilinear, when seen in a plan view of the top surface. Depending on the feed direction, one of the first and second major cutting edge portions may be the portion of the cutting edge which in longitudinal turning removes the majority of the material.

Each major cutting edge portion extends from an axially forward point to an axially rearward point.

"Forward" and "rearward", as used herein, is defined in relation to the rear surface in a top view. Hence, in relation to the axially rearward point of a major cutting edge portion, the axially forward point thereof is further away from the rear surface.

A distance from each axially forward point to the longitudinal axis is shorter than a distance from each axially rearward point to the longitudinal axis. Each axially forward point is spaced apart from the longitudinal axis in a top view.

The transition from one of the corner cutting edges, or the surface generating cutting edge, to one of the major cutting edge portions connected thereto is preferably smooth. In other words, each of the major cutting edge portions may extend, in relation to a corner cutting edge or surface generating cutting edge connected therewith, along a tangent to the corner cutting edge or surface generating cutting edge at a point where such cutting edge transitions into the maj or cutting edge portion, i.e., at the axially rearward point and the axially forward point, respectively.

Each major cutting edge portion, in a plan view of the top surface, may form an angle of 5°-45°, and for example 10°-30°, in relation to the tangent line of the surface generating cutting edge at the frontward point.

Each axially forward point is spaced apart from the frontward point of the cutting edge. For embodiments including two major cutting edge portions, a distance between the respective axially rearward points may be smaller than the greatest width of the head portion. In other words, the corner cutting edge connected to the major cutting edge portion may extend not only axially rearwards but also radially outwards from the axially rearward point when seen in a plan view of the top surface.

The greatest width of the head portion may for example be 105 - 175 % of the greatest width of the stem portion. The width of the stem portion is preferably constant or substantially constant. Said widths are measured perpendicular to the longitudinal axis. In other words, said widths are measured as the distance between the first and second side surfaces.

The top surface and/or the bottom surface may comprise seating means and one or more seating surfaces. The seating means preferably extend along or parallel to the longitudinal axis. The seating means on the top surface is preferably located on the stem portion but not on the head portion. Said seating means are arranged to improve clamping of the cutting insert in an insert seat, and to improve the stability and/or reduce the movement of the cutting insert during use. Said seating means are preferably in the form of one or more groove and/or one or more ridge. The top surface seating means preferably comprise a central top groove. The bottom surface seating means preferably comprise a central bottom groove.

In a top view, each corner cutting edge extends rearward from a first end point (corresponding to the axially rearward point of the major cutting edge portion to which the corner cutting edge is connected) to a second end point that may correspond to a radially outer point of the cutting edge. A side edge of the head portion extends rearward from the second end point of each corner cutting edge.

Hence, the cutting edge extends from and to respective end points of the cutting edge, and such end points may correspond to the respective second end points of the corner cutting edges, which may correspond to radially outer points of the head portion in a top view. Thus, according to some embodiments, the full length of the cutting edge is measured, in a top view, from the second end point of the first corner cutting edge to the second end point of the second corner cutting edge. The total length of the cutting edge may be greater than the greatest width of the head portion, for example 110-150% of the greatest width of the head portion.

A distance from the corner cutting edges to the longitudinal axis may be greater than a distance from the major cutting edge portions to the longitudinal axis. A distance from the corner cutting edges to the tangent line of the surface generating cutting edge at the frontward point may be greater than a distance from the major cutting edge portions to such tangent line.

In a top view, a distance from the front surface to the rear surface along the longitudinal axis may be 200 % - 1000 %, and for example 400 % - 700%, of the greatest width of the head portion. Thereby, the cutting insert is oblong and elongated in the direction of the longitudinal axis, and the accessibility and the possibility to mount the cutting insert in an insert seat is improved. Said distance from the front surface to the rear surface may for example be 10 - 50 mm.

According to some embodiments, the first length of extension (the length of extension of a corner cutting edge) may be at least two times greater than the second length of extension (the length of extension of the surface generating cutting edge). For example, the first length of extension may be in a range of 2-8 times greater.

According to some embodiments, the first length of extension is at most 20 times greater than the second length of extension.

A too great length of extension of the corner cutting edges may result in major cutting edge portions that are very short, which might not be desirable for many applications. A first length of extension that is less than 20 times the second length of extension may ensure that each of the major cutting edge portions has a sufficient length of extension.

According to some embodiments, the first length of extension is at least 10 % of the total length of extension of the cutting edge when seen in a plan view of the top surface. Hence, the corner cutting edges constitute a significant part of the cutting edge. As a consequence, each corner cutting edge can have a rounded off shape in a top view.

The first length of extension may be within a range of 10-30% of the total length of extension of the cutting edge. For example, the first length of extension may be about 20% of the total length of extension of the cutting edge.

According to some embodiments, each major cutting edge may have a length of extension that is 10 - 40 %, of the total length of extension of the cutting edge when seen in a plan view of the top surface

According to some embodiments, each corner cutting edge, in a plan view of the top surface, is formed by a single circular segment having a first radius of curvature. Such first radius of curvature may correspond to at least 7 % of the total length of extension of the cutting edge when seen in a plan view of the top surface. For example, the first radius of curvature may be at least 1 mm. Thereby, each corner cutting edge may form a smooth (rounded off) transition between the major cutting edge portion and the side edge of the head portion.

According to some embodiments, also the surface generating cutting edge, when seen in a plan view of the top surface, is formed by a single circular segment having a second radius of curvature. The first radius of curvature may be greater than the second radius of curvature, for example at least two times greater, such that the surface generating cutting edge, in relation to each corner cutting edge, is less rounded off and may form a relatively abrupt transition between the two major cutting edge portions. For example, the second radius of curvature may be selected such that the surface generating cutting edge is sufficiently strong while also well adapted for generating a high-quality surface in a longitudinal turning operation and facilitating a design wherein the adjacent major cutting edge portions have a sufficient length of extension.

In some embodiments, the surface generating cutting edge includes a wiper segment. As is well-known in the art, a wiper edge, or a wiper segment of a cutting edge, is formed by one or more large radiused curvilinear segments following a nose cutting edge and that "wipes" the surface behind such nose cutting edge, resulting in a better surface finish by smoothing out the scallops in the machined surface. As used herein, such wiper segment is considered as a part of the surface generating cutting edge.

Even if the surface generating cutting edge thus may include multiple curvilinear segments, such as circular segments of different radii of which some segments, in particular a wiper segment, even may have a greater radius of curvature than the corner cutting edges, the length of extension of the surface generating cutting edge (i.e., the combined lengths of all such curvilinear segments) will still be smaller than the length of extension of each corner cutting edge.

For a surface generating cutting edge that comprises multiple curvilinear segments of different curvature, the curvilinear segments that connect to respective major cutting edge portions on either side of the surface generating cutting edge may have a smaller radius of curvature than at least some of, and for example all of, the other intermediary curvilinear segments of the surface generating cutting edge.

According to a second aspect, the invention relates to a turning tool comprising a cutting insert according to any of the embodiments described herein. The turning tool includes a tool body comprising an insert seat in which the cutting insert is mounted.

### BRIEF DESCRIPTION OF DRAWINGS

The solution will now be described in more detail by means of exemplary embodiments and with reference to the accompanying drawings, in which:
Fig. 1 is a perspective view of a cutting insert according to a first embodiment.
Fig. 2 is a plan view of the top surface of the cutting insert in Fig. 1 including an enlarged view of a front portion of the cutting insert.
Fig. 3 is a side view of the cutting insert as seen from the direction III indicated in Fig. 2.
Fig. 4 is a perspective view of a cutting insert according to a second embodiment.
Fig. 5 is a plan view of the top surface of the cutting insert in Fig. 4 including an enlarged view of a front portion of the cutting insert.
Fig. 6 is a side view of the cutting insert as seen from the direction VI indicated in Fig. 5.
Fig. 7 illustrates a turning tool including a tool body and a cutting insert according to Figs. 4-6.
Fig. 8 is a side view of the turning tool in fig. 7.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

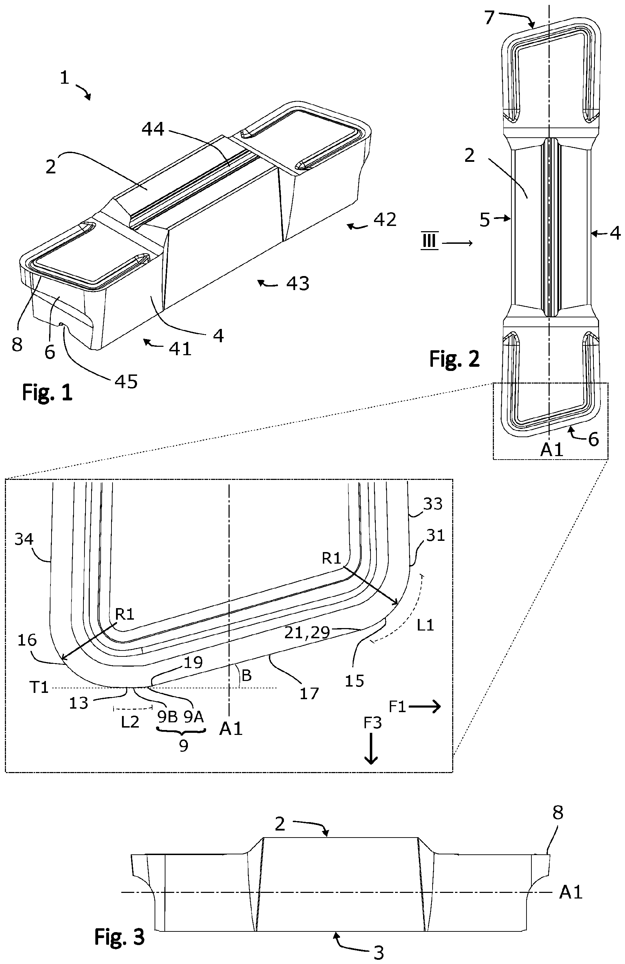

Figs. 1-3 illustrate a cutting insert 1 comprising a top surface 2 and a bottom surface 3, wherein the top and bottom surfaces 2,3 are arranged opposite each other and facing opposite directions. A peripheral surface connects the top surface 2 and the bottom surface 3. The peripheral surface includes a first side surface 4, second side surface 5, a front surface 6 and a rear surface 7. A longitudinal axis A1 intersects the front and rear surfaces 6, 7 and extends mid-way between the first and second side surfaces 4, 5. A cutting edge 8 is formed at an intersection between the top surface 2 and the front surface 6. The cutting edge 8 comprises a surface generating cutting edge 9, a first major cutting edge portion 17 and a first corner cutting edge 15. The cutting edge also comprises a second corner cutting edge 16. When seen in a plan view of the top surface 2, as shown in Fig. 2, the surface generating cutting edge 9 and each corner cutting edge 15, 16 are formed by curvilinear segments. Each corner cutting edge 15, 16 is formed by a single circular segment having a first radius of curvature R1. The surface generating cutting edge 9 is formed by a first and a second curvilinear segment 9A, 9B. The first curvilinear segment 9A corresponds to a main cutting edge which adjoins the first major cutting edge portion 17 and has a radius of curvature that is smaller than the first radius of curvature R1. The second curvilinear segment 9B, corresponding to a wiper edge, has a large radius of curvature, greater than the first radius of curvature R1.

The surface generating cutting edge 9 includes a frontward point 13 that is the point of the cutting edge that is located most forward, furthest from the rear surface 7. As illustrated in Fig. 2, a tangent line T1 of the surface generating cutting edge 9 at the frontward point 13 extends, in a plan view of the top surface, perpendicular to the longitudinal axis A1. The first major cutting edge portion 17 extends from the surface generating cutting edge 9 from a first axially forward point 19 to a first axially rearward point 21. Hence, the first major cutting edge portion 17 slopes away rearward from the surface generating cutting edge when seen in a top view. The first corner cutting edge 15 is located rearward of the first major cutting edge portion 17, extending from a first end point 29 of the first corner cutting edge 15 (corresponding to the first axially rearward point 21 of the first major cutting edge portion) to a second end point 31 of the first corner cutting edge 15. At the second end point 31, the first corner cutting edge 15 transitions into a first side edge 33 extending along an intersection between the top surface 2 and the first side surface 4. In a top view, the first corner cutting edge 15 has a first length of extension L1, and the surface generating cutting edge 9 has a second length of extension L2. As illustrated in Fig. 2, the first length of extension L1 is greater than the second length of extension L2, in this case a bit more than two times greater. In the illustrated embodiment, the first length of extension L1 corresponds to about 20 % of the total length of extension of the cutting edge 8 when seen in a top view.

As seen in Fig. 3, the cutting edge 8 is located in a single plane, i.e., the cutting edge 8 is straight in a side view.

In a top view, the first major cutting edge portion 17 is rectilinear and forms an angle B of approximately 15° in relation to the tangent line T1 of the surface generating cutting edge at the frontward point 13. Hence, in a longitudinal turning operation in a feed direction F1, the first major cutting edge portion would have an entering angle of 15° with respect to the workpiece surface.

The cutting insert 1 includes a first head portion 41 at a front end and a second head portion 42 at a rear end of the cutting insert 1. Between the head portions 41, 42, a stem portion 43 extends along the longitudinal axis A1. The stem portion 43 has a smaller width, in a direction across the top surface perpendicular to the longitudinal axis A1, than each of the head portions 41, 42. With two head portions 41, 42, the cutting insert 1 is indexable and the front surface 6 and the rear surface 7 may thus switch functions if the cutting insert is reversed (rotated 180° within an insert seat of a turning tool).

Both the top surface 2 and the bottom surface 3 include seating means in the form of central grooves 44, 45 extending between respective seating surfaces.

As best seen in Fig. 3, the cutting insert 1 is of the positive type. Hence, the cutting insert is single sided, with no cutting edges on the intersection between the bottom surface 3 and the peripheral surface 4.

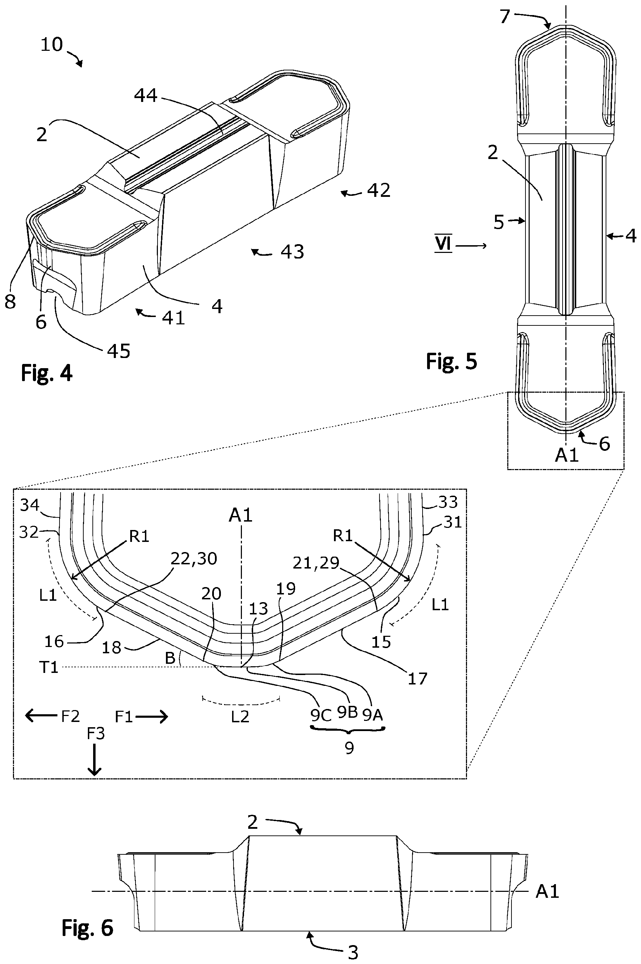

Figs. 4-6 illustrate a cutting insert 10 according to a second embodiment. The main difference between the cutting insert 10 and the cutting insert 1 illustrated in figs. 1-3 is that the surface generating cutting edge 9 is centrally arranged, and the cutting edge 8 includes a second major cutting edge portion 18. Thereby, the cutting insert may be used for longitudinal turning in any of two opposite feed directions F1, F2.

In this embodiment, the longitudinal axis A1 intersects the frontward point 13 when seen in a plan view of the top surface, and the longitudinal axis A1 corresponds to an axis of symmetry.

The second major cutting edge portion 18 extends from the surface generating cutting edge 9 from a second axially forward point 20 to a second axially rearward point 22. A distance from each of the first and second axially forward points 19, 20 to the longitudinal axis A1 is shorter than a distance from each of the first and second axially rearward points 21, 22 to the longitudinal axis A1. Hence, the second major cutting edge portion 18 slopes away rearward from the surface generating cutting edge 9 when seen in a top view. The second corner cutting edge 16 is located rearward of the second major cutting edge portion 18, extending from a first end point 30 of the second corner cutting edge (corresponding to the second axially rearward point 22 of the second major cutting edge portion 18) to a second end point 32 of the second corner cutting edge. At the second end point 32, the second corner cutting edge 16 transitions into a second side edge 34 extending along an intersection between the top surface 2 and the second side surface 5.

In the embodiment illustrated in figs. 4-6, each corner cutting edge 15, 16 is formed by a single circular segment having a first radius of curvature R1. The surface generating cutting edge 9 is formed by first, second and third curvilinear segment 9A, 9B, 9C. Either the first curvilinear segment 9A or the third curvilinear segment 9C acts as main cutting edge (depending on the cutting direction). The first curvilinear segment 9A and the third curvilinear segment 9C adjoin the first major cutting edge portion 17 and the second major cutting edge portion 18, respectively, and each has a radius of curvature that is smaller than the first radius of curvature R1. The second curvilinear segment 9B, corresponding to a wiper edge, has a large radius of curvature, greater than the first radius of curvature R1.

In a top view, each of the first and second corner cutting edges 15, 16 has a first length of extension L1 that is greater than the second length of extension L2 of the surface generating cutting edge 9. As illustrated in Fig. 5, the cutting insert 10 according to this second embodiment has corner cutting edges having a first length of extension L1 that is about 1.5 times the second length of extension L2. The first length of extension L1 corresponds to about 15 % of the total length of extension of the cutting edge 8 when seen in a top view.

In other (not illustrated) embodiments, the surface generating cutting edge 9 may be formed by a single radius of curvature, resulting in a smaller length of extension. In such embodiments, the first length of extension L1 may be relatively much greater than the second length of extension L2.

In a top view, the first and second major cutting edge portions 17, 18 are rectilinear and forms an angle B of approximately 27° in relation to the tangent line T1 of the surface generating cutting edge 9 at the frontward point 13. Hence, in a longitudinal turning operation in any of two opposite feed directions F1, F2, the respective first or second major cutting edge portion 17, 18 would have an entering angle of 27° with respect to the workpiece surface.

It should be noted that both a cutting insert according to the first embodiment illustrated in figs. 1-3, and a cutting insert according to the second embodiment illustrated in figs. 4-6, may be used for machining in a third feed direction F3 parallel to the longitudinal axis A1, e.g., for a facing operation, wherein one of the corner cutting edges 15, 16 would be used as main cutting edge.

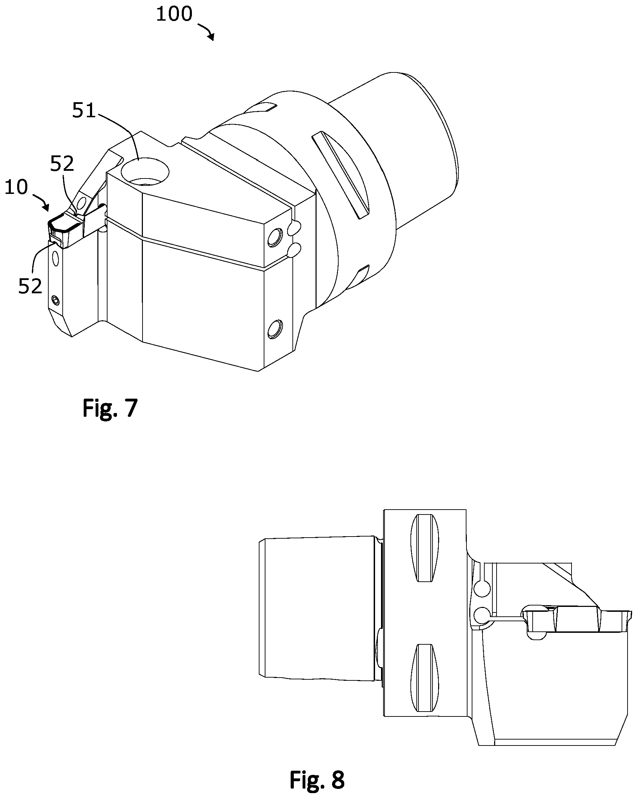

Figs. 7-8 illustrate a turning tool comprising a turning tool body 100 and the cutting insert 10 shown in Figs. 4-6.

The turning tool body 100 has an insert seat in which the cutting insert 10 is arranged. As is well-known in the art, a clamping arrangement 51 is used for fixing the cutting insert within the seat, and centrally arranged seating protrusions, matching the seating grooves 44, 45 of the cutting insert 10, extends along the longitudinal axis of the cutting insert and improves the stability of the mounting of the cutting insert within the seat.

## Claims

1. A cutting insert (1) for a turning tool, the cutting insert comprising:
- a top surface (2) and a bottom surface (3), wherein the top and bottom surfaces are arranged opposite each other and facing opposite directions;
- a peripheral surface connecting the top surface (2) and the bottom surface (3), wherein the peripheral surface includes a first side surface (4), a second side surface (5), a front surface (6), and a rear surface (7), wherein the first and second side surfaces are arranged opposite each other and facing opposite directions, and the front and rear surfaces are arranged opposite each other and facing opposite directions;
- a longitudinal axis (A1) intersecting the front and rear surfaces (6, 7), wherein the longitudinal axis (A1) extends mid-way between the first and second side surfaces (4, 5); and
- a cutting edge (8) being at least partly formed at an intersection between the top surface (2) and the front surface (6), wherein the cutting edge (8) comprises a surface generating cutting edge (9), a first major cutting edge portion (17) and a first corner cutting edge (15);
wherein the surface generating cutting edge (9) includes a frontward point (13), and wherein a tangent line (T1) of the surface generating cutting edge (9) at the frontward point (13) extends, in a plan view of the top surface, perpendicular to the longitudinal axis (A1), wherein the first major cutting edge portion (17) extends from the surface generating cutting edge (9) from a first axially forward point (19) to a first axially rearward point (21), wherein a distance from the first axially forward point (19) to the longitudinal axis (A1) is shorter than a distance from the first axially rearward point (21) to the longitudinal axis (A1), and wherein the first corner cutting edge (15) is located rearward of the first major cutting edge portion (17), extending from the first axially rearward point (21), and wherein, in a plan view of the top surface, the first corner cutting edge (15) is convexly curved and has a first length of extension (L1) and the surface generating cutting edge (9) is convexly curved and has a second length of extension (L2), **characterized in that** the first length of extension (L1) is greater than the second length of extension (L2).

2. The cutting insert according to claim 1, wherein the cutting edge (8) comprises a second major cutting edge portion (18) and a second corner cutting edge (16), and wherein the first and second major cutting edge portions (17, 18) are located on opposite sides of the surface generating cutting edge (9), and wherein the second major cutting edge portion (18) extends from the surface generating cutting edge (9) from a second axially forward point (20) to a second axially rearward point (22), wherein a distance from the second axially forward point (20) to the longitudinal axis (A1) is shorter than a distance from the second axially rearward point (22) to the longitudinal axis (A1), and wherein the second corner cutting edge (16) is located rearward of the second major cutting edge portion (18), extending from the second axially rearward point (22), and wherein, in a plan view of the top surface, the second corner cutting edge (15) is convexly curved and has the first length of extension (L1).

3. The cutting insert according to any of the previous claims, wherein the first length of extension (L1) is at most 20 times greater than the second length of extension (L2).

4. The cutting insert according to any of the previous claims, wherein the first length of extension (L1) is at least 10 % of a total length of extension of the cutting edge (8) when seen in a plan view of the top surface (2).

5. The cutting insert according to any of the previous claims, wherein, in a plan view of the top surface, each of the corner cutting edges (15, 16) is formed by a single circular segment having a first radius of curvature (R1).

6. The cutting insert according to claim 5, where the first radius of curvature (R1) is at least 7 % of the a total length of extension of the cutting edge (8) when seen in a plan view of the top surface (2).

7. The cutting insert according to any of the previous claims, wherein the first length of extension (L1) is at least two times greater than the second length of extension (L2).

8. The cutting insert according to any of the previous claims, wherein the surface generating cutting edge (9) includes a wiper segment (9B).

9. A turning tool comprising a cutting insert, according to any of the claims 1-8, wherein the turning tool includes a tool body (100) comprising an insert seat in which the cutting insert is mounted.
